# EUROPEAN PATENT SPECIFICATION

(11) **EP 2 980 626 B1**
(45) Date of publication and mention of the grant of the patent: **21.09.2022**
(21) Application number: 15176577.3
(22) Date of filing: 14.07.2015
(51) Int. Cl.: G02B 26/10, G02B 26/08

(54) **LIGHT DEFLECTOR, AND APPARATUS HAVING LIGHT DEFLECTOR**
LICHTABLENKER UND VORRICHTUNG MIT DEM LICHTABLENKER
DÉFLECTEUR DE LUMIÈRE ET APPAREIL ÉQUIPÉ D'UN DÉFLECTEUR DE LUMIÈRE

(30) Priority: 29.07.2014 JP 2014154292; 18.05.2015 JP 2015100918
(43) Date of publication of application: 03.02.2016
(73) Proprietor: Ricoh Company, Ltd., Tokyo 143-8555 (JP)
(72) Inventor: AKANUMA, Goichi, Tokyo 143-8555 (JP)
(74) Representative: SSM Sandmair

(56) References cited:
- DE-A1-102012 208 117
- JP-A- 2010 128 116
- JP-A- 2012 198 298
- JP-A- 2014 115 612
- US-A1- 2010 309 536
- US-A1- 2011 002 022
- US-A1- 2013 128 328

## Description

### BACKGROUND

### Technical Field

Example embodiments generally relate to a light deflector, and an apparatus having the light deflector such as an optical scanner, image forming apparatus, image projector, and a heads-up display (HUD).

### Background Art

As known in the art, deflection mirrors that serve as light deflectors use electrostatic force, electromagnetic force, or piezoelectric force. The deflection mirrors that use electrostatic force have parallel-plate electrodes or comb-like electrodes. The deflection mirrors that have comb-like electrodes can generate relatively large power due to the improved technology in micromachining in recent years, but sufficiently wide deflection angle cannot be obtained. For this reason, it becomes necessary to increase the level of driving voltage as compensation for insufficient deflection angle. In order to increase the driving voltage, the size of the components of the power source tends to increase, and this results in upsizing as a whole and an increase in cost. The deflection mirrors that use electromagnetic force require permanent magnets to be arranged outside, and the arrangement of the device tends to be complicated. This leads to low productivity, and downsizing becomes difficult.

Deflection mirrors that use magnetostrictive films or the like have been studied, but the characteristics as magnetic substance are inferior and thus sufficient characteristics cannot be obtained. Moreover, when an electric current is passed through the coils, excessive heat tends to be generated and the power consumption increases. The deflection mirrors that use piezoelectric force require relatively large driving voltage, but it is possible to generate a large level of force from small power. Although piezoelectric devices can generate great force, the amount of deformation is slight. In order to increase the amount of deformation, unimorph structure or bimorph in which piezoelectric materials are stuck on other bar-like elastic members is adopted. By so doing, slight deformation due to piezoelectric force towards and away from the surface is transformed to the bending force of the bar-like member, and deformation is achieved to a large degree.

Structure is known in which the outer ends of a pair of elastic supporting members (torsion bars) are supported by a pair of deformable flat springs (drive bars) that are fixed to a base and a mirror unit is rotated and oscillated by the bending deformation caused to the drive bars (see, for example, JP-2011-018026-A or US 2010/0309536 A1). The axis of the torsion bar is misaligned from the center of gravity of the mirror unit. By applying voltage to the piezoelectric material fixed to the drive bar, the piezoelectric material expands and contracts and the drive bar bends and deforms. Although the direction in which the drive bars oscillate is approximately in the normal-line direction of the light reflection plane of the mirror unit, the mirror unit rotates and oscillates due to a moment generated by the misalignment between the torsion bars and the center of gravity of the mirror unit. When the mirror unit rotates and oscillates, the torsion bars twist and deform mainly around the axis and support the rotation and oscillation of the mirror unit.

In the optical scanners using micromachining technology as described above, due to reduction in size and speedups, the light reflection plane of the mirror unit of the light deflector may deform when the mirror unit is driven and deteriorate the shape of a beam spot. In other words, when the drive frequency of the mirror unit becomes as high as a few kHz to a few tens of kHz, the mirror unit that is made of silicon material may deform, and there are some cases in which the optically-required precision of the plane of the light reflection plane cannot be maintained. In order to deal with such problematic cases, structure in which a rib is provided on the other side of the mirror unit with which the light reflection plane is not provided to enhance the mechanical strength of the mirror unit and reduce the dynamic distortion of the light reflection plane has been suggested (see, for example, JP-2010-128116-A).

When the diameter of the mirror unit is increased, the angle of the amplitude (deflection angle) of the mirror unit is increased, or the resonance frequency is increased (speed is enhanced) in order to improve the performance of an optical scanner in the structure as disclosed, for example, in JP-2011-018026-A, the amount of misalignment of the torsion bars needs to be increased with reference to the center of gravity (i.e., center position) of the mirror unit so as to increase a moment. However, when the amount of misalignment of the torsion bars is increased, the asymmetry level of the torsion bars increases with reference to the mirror unit. As the mirror unit is designed to rotate around the center of the mirror, the axis of the torsion bars is misaligned from the center of rotation of the mirror unit when the amount of misalignment of the torsion bars is increased, and extra deformation force (e.g., bending force) is applied to the torsion bars in addition to the torsion around the axis of the torsion bars. Accordingly, damage or failure occurs easily.

According to one aspect of the present invention, the moment of oscillation of a mirror unit can be enhanced without increasing the amount of misalignment of elastic supporting members with reference to the center of gravity of the mirror unit. Accordingly, breakage or failure is prevented, and the performance of an optical scanner improves.

### SUMMARY

Embodiments of the present invention described herein provide a light deflector as defined in claim 1

According to one aspect of the present invention, the moment of oscillation of a mirror unit can be enhanced without increasing the amount of misalignment of elastic supporting members with reference to the center of gravity of the mirror unit. Accordingly, breakage or failure is prevented, and the performance of an optical scanner improves.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a perspective view of a light deflector according to a first example embodiment of the present invention.
FIG. 2A is a front view of the light deflector of FIG. 1 viewed from a normal-line direction of the light reflection plane, and FIG. 2B is a sectional view of line B-B of FIG. 2A.
FIG. 3 is a rear view of a mirror unit according to an example embodiment of the present invention.
FIG. 4A is a plan view of the wiring for applying voltage, FIG. 4B is a sectional view of line B-B of FIG. 4A, and FIG. 4C is a sectional view of line C-C of FIG. 4A.
FIG. 5 is a diagram of a modification of a base according to an example embodiment of the present invention.
FIG. 6A is a front view of a light deflector according to a second example embodiment viewed from a normal-line direction of the light reflection plane, and FIG. 6B is a sectional view of line B-B of FIG. 6A.
FIG. 7A is a rear view of a mirror unit according to a second example embodiment of the present invention, and FIG. 7B is a modification of the mirror unit of FIG. 7A.
FIG. 8A is a front view of a light deflector according to a third example embodiment viewed from a normal-line direction of the light reflection plane, and FIG. 8B is a sectional view of line B-B of FIG. 8A.
FIG. 9A is a rear view of a mirror unit according to a third example embodiment of the present invention, FIG. 9B is a modification of the mirror unit of FIG. 9A, and FIG. 9C is another modification of the mirror unit of FIG. 9A.
FIG. 10 is another modification of a mirror unit according to a third example embodiment of the present invention.
FIG. 11A is a front view of a light deflector according to a fourth example embodiment viewed from a normal-line direction of the light reflection plane, and FIG. 11B is a sectional view of line B-B of FIG. 11A.
FIG. 12 is a rear view of a mirror unit according to a fourth example embodiment of the present invention.
FIG. 13A is a front view of a light deflector according to a fifth example embodiment viewed from a normal-line direction of the light reflection plane, and FIG. 13B is a sectional view of line B-B of FIG. 13A.
FIG. 14A is a front view of a light deflector according to a sixth example embodiment viewed from a normal-line direction of the light reflection plane, and FIG. 14B is a sectional view of line B-B of FIG. 14A.
FIG. 15 is a rear view of a mirror unit according to a sixth example embodiment of the present invention.
FIG. 16A is a front view of a light deflector according to a seventh example embodiment viewed from a normal-line direction of the light reflection plane, and FIG. 16B is a sectional view of line B-B of FIG. 16A.
FIG. 17 is a rear view of a mirror unit according to a seventh example embodiment of the present invention.
FIG. 18 is a perspective view of an optical scanner according to an eighth example embodiment of the present invention.
FIG. 19 is a perspective view of the driving mechanism of a deflection mirror according to an eighth example embodiment of the present invention.
FIG. 20 illustrates an image forming apparatus according to a ninth example embodiment of the present invention.
FIG. 21 is a diagram of an image projector according to a tenth example embodiment of the present invention.
FIG. 22 is a perspective view and schematic block diagram of an image projector according to an example embodiment of the present invention.
FIG. 23 is a schematic diagram of a heads-up display (HUD) according to an eleventh example embodiment of the present invention.
FIG. 24 is a diagram illustrating the relationship between the position of a HUD inside a vehicle and the position at which an image projected by the HUD is visually recognized, according to an example embodiment of the present invention.
FIG. 25 is a diagram of the image forming unit of a HUD according to an example embodiment of the present invention.
FIG. 26A is a front view of a light deflector viewed from a normal-line direction of the light reflection plane, and FIG. 26B is a sectional view of line B-B of FIG. 26A, according to the prior art.
FIG. 27 is a rear view of a mirror unit, illustrating the amount of misalignment of torsion bars in a light deflector according to the prior art.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

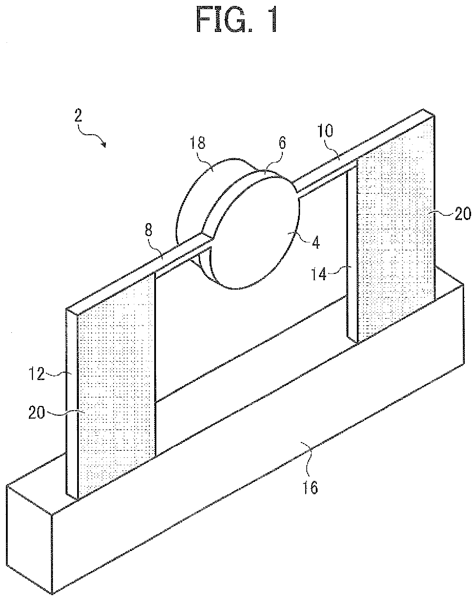

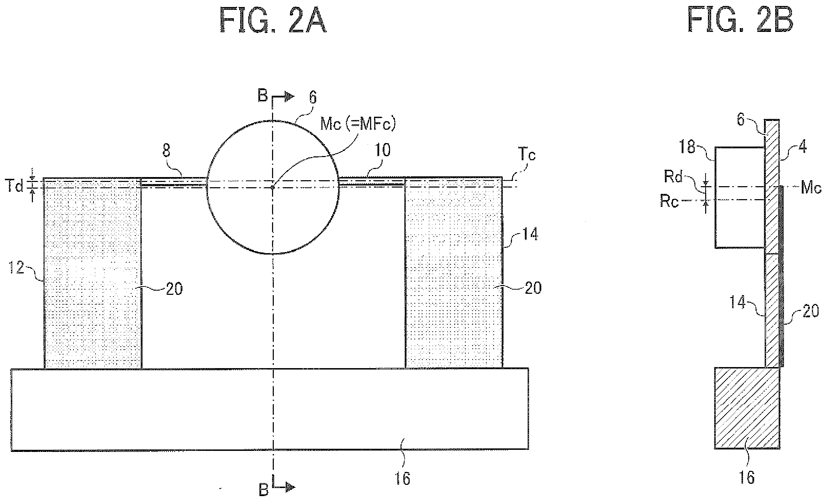

Example embodiments of the present invention will be described below with reference to the drawings. The first example embodiment is described with reference to FIGS. 1 to 5. As illustrated in FIG. 1 and FIGS. 2A and 2B, a light deflector 2 according to the present example embodiment is a deflection mirror that deflects light in one direction. The light deflector 2 includes a mirror unit 6 with a light reflection plane 4, torsion bar springs 8 and 10 that serve as a pair of elastic supporting members whose ends on one side are fixed to the mirror unit 6 to support the mirror unit 6 so as to rotate and oscillate as desired, drive bars 12 and 14 that serve as bar-like members whose ends on one side are fixed to the other ends of the torsion bar springs 8 and 10, and base 16 on which the other ends of the drive bars 12 and 14 are fixed. On the other side of the mirror unit 6 with which the light reflection plane 4 is not provided, a cylindrical rib 18 that enhance the mechanical strength of the mirror unit 6 to reduce the distortion of the light reflection plane 4 is integrally formed. In the following description, the torsion bar spring is referred to as a torsion bar in short.

The drive bars 12 and 14 are fixed to the base 16 so as to project from the base 16 in the same direction, and are attached to one side of the each of the torsion bars 8 and 10. More specifically, the mirror unit 6 and the torsion bars 8 and 10 are supported on the base 16 like a cantilever, via the pair of drive bars 12 and 14.

A piezoelectric material 20 is fixed onto the surface of each of the drive bars 12 and 14 like a film, and the drive bars 12 and 14 and the piezoelectric material form a unimorph drive bar shaped like a rectangular flat plate as a whole. In the present example embodiment, the mirror unit 6, the torsion bars 8 and 10, and the drive bars 12 and 14 are integrally formed by micro-electromechanical systems (MEMS) processing using silicon materials. The light reflection plane 4 is formed on the mirror unit 6 by forming a thin film made of metal such as aluminum and silver on the surface of the silicon substrate. The mirror unit 6 enters a moment of rotation where the mirror unit 6 is rotated when the bending deformation caused to the drive bars 12 and 14 by application of voltage is transferred to the mirror unit 6 through the torsion bars 8 and 10 (the bending deformation of the drive bars 12 and 14 will be described later in detail). When the mirror unit 6 rotates, the torsion bars 8 and 10 twist and deform, and elastic force that restores the original state of the mirror unit 6 is caused. As this series of processes is repeated, the mirror unit 6 rotates and oscillates at a constant amplitude.

The rotation and oscillation described above indicates the repetitive movement of rotation in one direction and the opposite direction (return) within the range of a prescribed angle around the rotational axis.

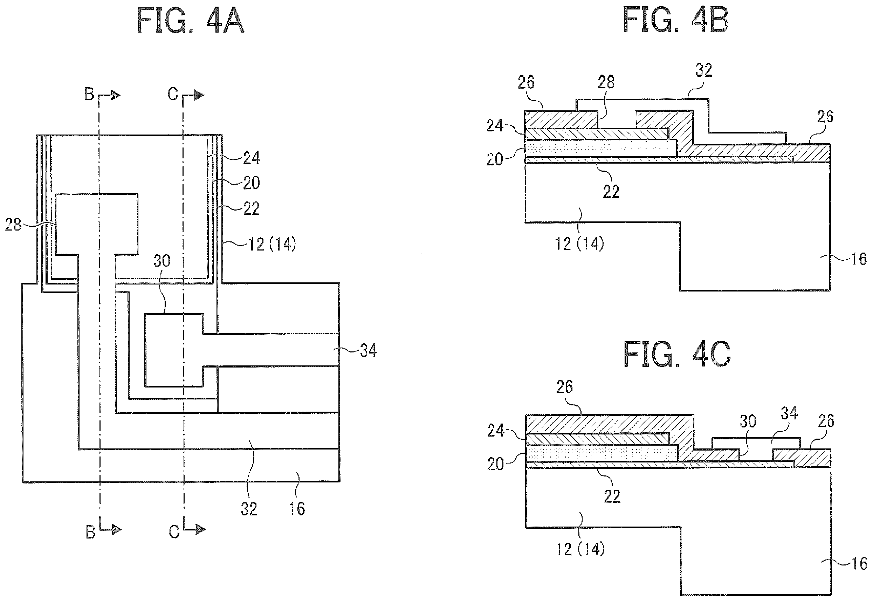

The wiring for applying an electric field to the piezoelectric material 20 is omitted in FIG. 1 and FIGS. 2A and 2B, but such wiring will be described later with reference to FIGS. 4A, 4B, and 4C. FIG. 4A is a plan view of the wiring pattern near the edges of the drive bars on the base 16 side, according to the present example embodiment. FIG. 4B is a sectional view of line B-B of FIG. 4A, and FIG. 4C is a sectional view of line C-C of FIG. 4A, according to the present example embodiment. As illustrated in FIGS. 4A, 4B, and 4C, a lower electrode 22 is provided on the surface of the drive bars 12 and 14, and the piezoelectric material 20 and an upper electrode 24 are further provided thereupon. On the top surface, an insulating layer 26 is provided. The lower electrode, the piezoelectric material, and the upper electrode are formed in multilayer and stacked above the drive bars by sputtering, and etching is performed so as to remove unnecessary portions. The adhesive layer may be made of titan (Ti), and the upper electrode and the lower electrode may be made of platinum (Pt). Moreover, the piezoelectric material may be made of lead zirconate titanate (PZT). In FIGS. 4A, 4B, and 4C, reference signs 28 and 30 indicate contact holes, and reference signs 32 and 34 indicate aluminum wirings (the sectional views of the contact holes 28 and 30 and the aluminum wirings 32 and 34 are not omitted).

The wiring pattern for applying voltage to the piezoelectric material 20 is connected to a center area of the pair of the drive bars 12 and 14. In FIG. 4A, the insulating layer 26 is omitted. When the wiring is derived from the land as above and voltage is applied to between the upper electrode 24 and the lower electrode 22, the volume of the piezoelectric material 20 changes due to electrostrictive characteristics, and the piezoelectric material 20 expands and contracts towards and away from the surface of the drive bars. Accordingly, bending deformation is caused to the drive bars 12 and 14. Voltage with sinusoidal waveform is applied to the piezoelectric material 20 such that the pair of drive bars 12 and 14 repeat bending deformation approximately in a normal-line direction of the light reflection plane 4 of the mirror unit 6 and oscillate.

As illustrated in FIGS. 2A and 2B, the axis Tc of the torsion bars 8 and 10 is misaligned from the center Mc of the mirror unit 6. More specifically, the center Mc of the mirror unit 6 is misaligned from the axis Tc of the torsion bars 8 and 10 towards the base 16, i.e., towards the fixed edges of the drive bars 12 and 14. For this reason, the mirror unit 6 enters a rotating moment when the bending deformation caused to the drive bars 12 and 14 causes oscillation. Accordingly, the mirror unit 6 rotates and oscillates. When the mirror unit 6 rotates and oscillates, the torsion bars 8 and 10 that support the mirror unit 6 twist and deform mainly around the axis.

In the present example embodiment, example cases in which the piezoelectric material 20 is formed by film formation processes. However, no limitation is indicated thereby, and the piezoelectric material 20 may be formed by pasting any bulk material.

Because the torsion bars 8 and 10 and the drive bars 12 and 14 are arranged such that the longer-side directions are approximately orthogonal to each other, the rotational power that is caused by the bending deformation of the drive bars 12 and 14 can efficiently be converted into deformation power of the torsion bars 8 and 10 in twisting directions. Because the drive bars 12 and 14 support the torsion bars 8 and 10 on the free end sides like a cantilever, the mirror unit 6 can oscillate at large amplitude.

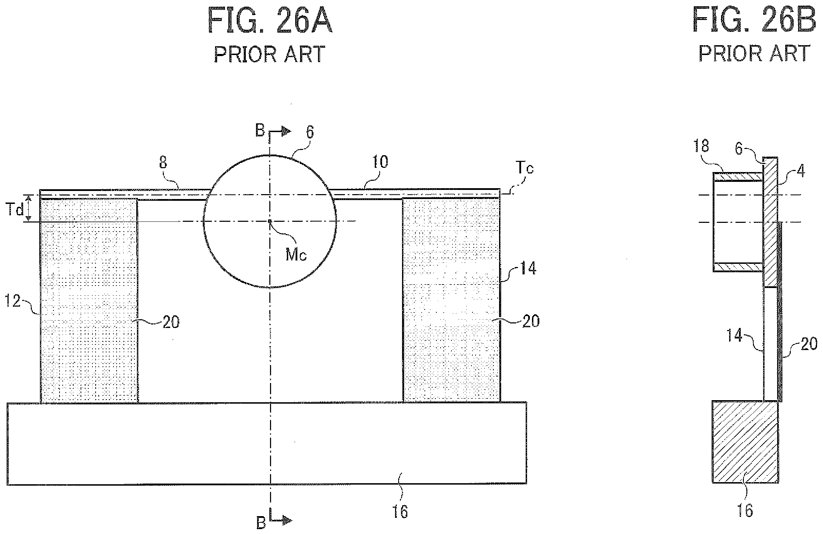

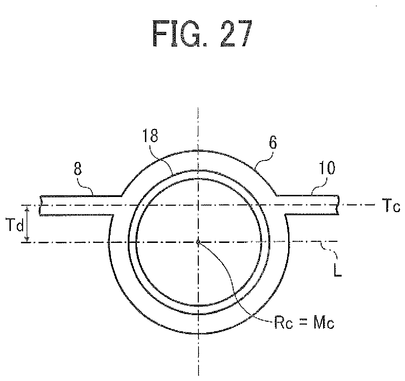

When the diameter of the mirror unit is increased, the angle of the amplitude of the mirror unit is increased, or the resonance frequency is increased in order to improve the performance of an optical scanner as described above, the amount of misalignment Td of the torsion bars needs to be increased with reference to the center of gravity (i.e., center position) of the mirror unit. In other words, in the prior art, as illustrated in FIGS. 26A and 26B, the amount of misalignment of the torsion bars 8 and 10 needs to be increased with reference to the center of gravity Mc of the mirror unit 6. However, when the amount of misalignment of the torsion bars is increased, the asymmetry level of the torsion bars about the mirror unit 6 increases with reference to a line L that passes through the center Mc of the mirror unit 6 and is parallel to the axis Tc of the torsion bar, as illustrated in FIG. 27. Accordingly, damage or failure occurs easily. The mirror unit is designed to rotate around the center of the mirror. However, when the amount of misalignment of the torsion bars is increased, the axis Tc of the torsion bars is misaligned from the center of rotation of the mirror unit. Accordingly, extra deformation force (e.g., bending force) is applied to the torsion bars in addition to the torsion around the axis of the torsion bars.

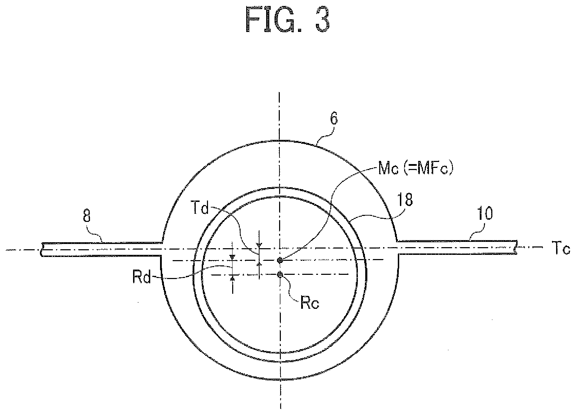

In order to solve such problems as described above, in the present example embodiment, the center of gravity of the mirror unit is misaligned from the center in shape of the mirror unit 6, which is center of gravity of the plane obtained by projecting the mirror unit 6 in the normal-line direction of the light reflection plane 4. FIG. 3 is a rear view of the mirror unit 6 (i.e., a view from the other side of the light reflection plane) according to the present example embodiment. As illustrated in FIG. 3, the axis Tc of the torsion bars 8 and 10 is misaligned to the side opposite the base 16, and the center Rc of the rib 18 is misaligned to the side of the base 16, with reference to the center in shape MFc of the mirror unit 6. Reference sign Rd indicates the amount of misalignment of the rib 18. As the center Rc of the rib 18 is misaligned to the side of the side of the base 16 with reference to the center Mc of the mirror unit 6, the center of gravity of the mirror unit 6 for which the rib 18 is integrally provided is misaligned to the side of the base 16 with reference to the center in shape MFc of the mirror unit 6.

In other words, the center of gravity of the mirror unit 6 is misaligned in a direction parallel to the light reflection plane 4 and in a direction perpendicular to the rotation axis of the mirror unit 6, with reference to the center in shape of the mirror unit 6. The torsion bars 8 and 10 are misaligned from the center in shape of the mirror unit 6 in a direction opposite to the direction in which the center of gravity of the mirror unit 6 is misaligned from the center in shape of the mirror unit 6.

The center of gravity of the mirror unit 6 for which the rib 18 is integrally provided exists between the center in shape MFc of the mirror unit 6 and the center Rc of the rib 18. In other words, the center of gravity of the mirror unit 6 for which the rib 18 is integrally provided is misaligned to the side of the part connecting the drive bars 12 and 14 and the base 16, with reference to the center in shape MFc of the mirror unit 6. Accordingly, strong moment (rotating force) is produced at the mirror unit 6 when the drive bars 12 and 14 oscillate, and the rotation amplitude of the mirror unit 6 can be increased. More specifically, in the present example embodiment, "a moment of rotation where a mirror unit is rotated" is caused by the misaligned center of gravity of the mirror unit 6 with reference to the center in shape MFc of the mirror unit 6, in addition to conventional types of "moment of rotation where a mirror unit is rotated" caused by the offset of the torsion bars with reference to the center Mc of the mirror unit 6. Accordingly, the rotation amplitude of the mirror unit 6 can be increased.

The center in shape MFc is the center of gravity of the planar shape that is formed by projecting the three-dimensional shape in a normal-line direction of the light reflection plane, and is synonymous with the term centroid. Even if the mirror unit 6 is concave-shaped or convex-shaped in a normal-line direction, the projected planar shape remains the same. For this reason, when the mirror unit 6 is a perfect circle as in the present example embodiment, the center in shape MFc of the mirror unit 6 matches the center Mc of the mirror unit 6.

In the distortion prevention of a light reflection plane as disclosed, for example, in JP-2010-128116-A, the center of gravity of a mirror unit matches the center in shape of the mirror unit because the symmetry is maintained about the center in shape of the mirror unit. In other words, as illustrated in FIG. 27, the center Rc of the rib 18 is arranged so as to match the center of the mirror unit 6 in the prior art, and thus the center of gravity of the mirror unit 6 including the rib 18 matches the center in shape of the mirror unit 6. Accordingly, in the prior art, the center of gravity of the mirror unit 6 is not misaligned with reference to the center in shape MFc of the mirror unit 6, and thus "a moment of rotation where a mirror unit is rotated" is not caused due to the misalignment of the center of gravity.

When the mirror unit 6 rotates and oscillates in wide amplitude and at high speed, the mirror unit 6 that is made of silicon slightly deforms, and there are some cases in which the optically-required precision of the plane of the light reflection plane 4 cannot be maintained. In such cases, the rib 18 prevents the mirror unit 6 from deforming. As illustrated in FIG. 3, the center of gravity of the mirror unit 6 including the rib 18 shifts to the base 16, and this results in an increase in the amount of misalignment with the axis Tc of the torsion bars 8 and 10. Accordingly, the rotating moment where the mirror unit 6 rotates caused when the drive bars 12 and 14 oscillate can be enhanced, In other words, by shifting the position of the rib 18 away from the center of the mirror unit 6 to misalign the center of gravity of the mirror unit 6, effects similar to those obtained by increasing the amount of misalignment Td of the torsion bars can be obtained while maintaining the distortion prevention of the light reflection plane implemented by the rib 18.

If the characteristics of the light deflector (e.g., angle of amplitude, resonance frequency, and size of mirror) are equalized, the amount of misalignment Td of the torsion bars can be reduced in comparison to the prior art by shifting the position of the rib 18 away from the center of the mirror unit 6. As the center of rotation of the mirror unit 6 varies according to factors such as the length of the drive bars and the amount of misalignment of the torsion bars when oscillation is actually caused, the center in shape of the mirror unit is designed to match the center of rotation. However, when the amount of misalignment of the torsion bars with reference to the center in shape of the mirror unit is large, it becomes difficult to match the center of rotation. When the center in shape of the mirror unit does not match the center of rotation, deformation force (e.g., bending force) is applied to the torsion bars in addition to the torsion around the axis of the torsion bars. Accordingly, damage or failure occurs easily. In other words, when the amount of misalignment of the torsion bars increases, extra deformation force such as bending force is applied to the torsion bars in addition to the torsion around the axis of the torsion bars, and damage or failure occurs easily.

In the present example embodiment, the center of rotation of the mirror unit can match the center in shape of the mirror unit by shifting the position of the rib 18, and thus effects similar to those obtained by increasing the amount of misalignment of the torsion bars can be obtained. Accordingly, the deformation that is caused to the torsion bars can be kept to normal degree of twist and deformation, and damage or failure can be prevented from occurring.

An optimal amount of misalignment varies depending on factors such as the size of mirror, resonance frequency, and the desired level of performance of light deflector. For example, when the size of mirror ϕ is 1 mm and the resonance frequency is 20 kHz, the moment of oscillation of the mirror unit can be increased to a sufficient degree by shifting the center of gravity by about 100 µm. Alternatively, asymmetry may be implemented with reference to an axis parallel to the rotation axis Tc of the torsion of the torsion bars, where the center of gravity of the mirror unit is shifted away from the center in shape of the mirror unit by about a few µm to a few tens of µm and the torsion bars is shifted in the direction opposite to the direction in which the center of gravity of the mirror unit is shifted. By so doing, the moment of oscillation of the mirror unit can be increased to a sufficient degree in a similar manner to the above cases where the center of gravity of the mirror unit is shifted by about 100 µm.

In the present example embodiment, the center of gravity is shifted by adding the rib 18 to the mirror unit 6. However, the materials of the mirror unit 6 may be varied in part to shift the center of gravity due to differences in specific gravity. The size or mass of the rib 18 is determined so as to suppress the adverse effect of the moment of inertia caused in the rotation and oscillation of the mirror unit 6.

The drive waveform that is applied to the piezoelectric material 20 may be pulse or wavelike, and it is desired that the frequency be close to the natural frequency of the mode in which the mirror unit 6 rotates and oscillates. In the present example embodiment, the configuration was described in which a layer of piezoelectric materials is formed by sputtering together with a lower electrode and upper electrode. However, the piezoelectric materials may be made of bulk material, and the piezoelectric materials may be cut into specified sizes and pasted using adhesive. Alternatively, the piezoelectric materials may be formed by chemical-vapor deposition (CVD), bulk-oxide fuel-cycle process (SOL-GEL), aerosol deposition (AD) process, or the like. In the present example embodiment, the drive bars 12 and 14 were described in unimorph structure in which piezoelectric materials are disposed on one side of the bar-like members. However, the drive bars 12 and 14 may be made in bimorph structure in which piezoelectric materials are disposed on both sides of the bar-like members.

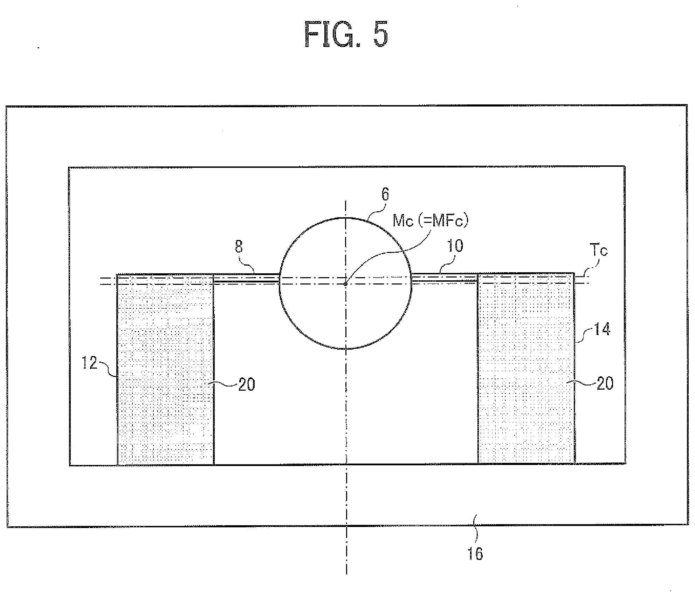

In the present example embodiment, the center of gravity of the mirror unit 6 may be shifted away from the center in shape of the mirror unit 6 towards the base 16. However, the center of gravity of the mirror unit 6 may be shifted in the opposite direction. The direction in which the center of gravity of the mirror unit is not limited to the example embodiment described above as long as the direction is parallel to the light reflection plane and perpendicular to the rotation axis of the torsion of the torsion bars. The base 16 may have any shape as long as it can fix the drive bars and piezoelectric materials, the torsion bars, and the mirror unit. As illustrated in FIG. 5, the base 16 may surround the mirror unit 6. The same applies to the other example embodiments described below.

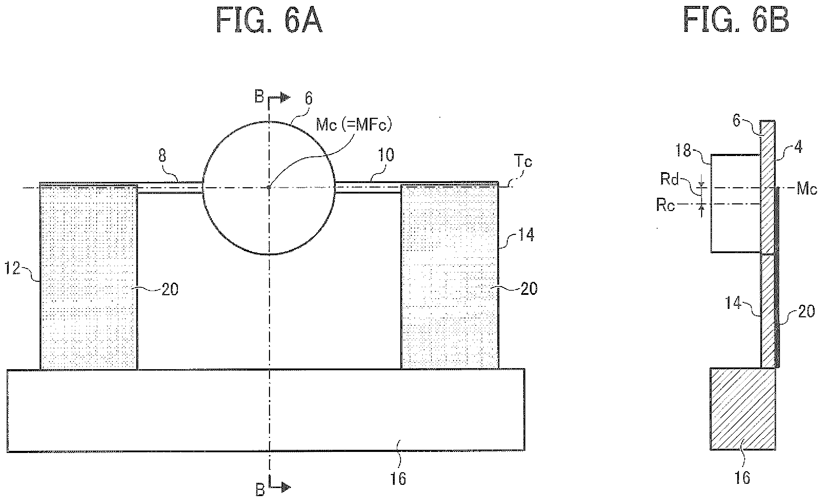

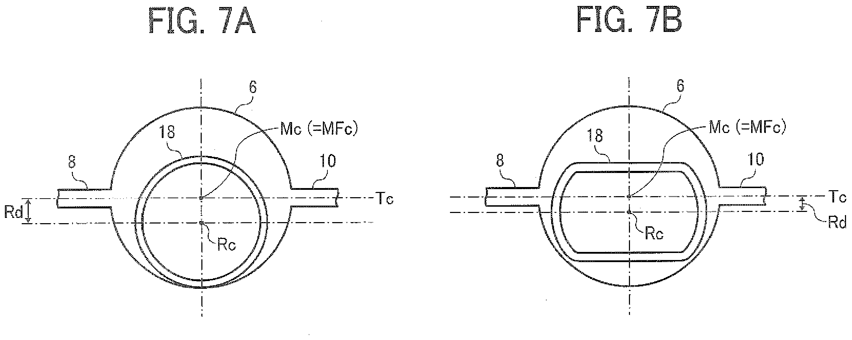

A second example embodiment of the present invention is described below with reference to FIGS. 6A and 6B and FIGS. 7A and 7B. In the description of the second embodiment, like reference signs are given to elements similar to those described in the first embodiment, and overlapping description may be omitted (this applies to the other example embodiments described below). Although it depends on the shape of the rib or a desired degree of moment, the axis of the torsion bars may match the center in shape of the mirror unit by the offset of the rib. In other words, in the present example embodiment, moment of rotation can be obtained only by shifting the center of gravity of the mirror unit away from the center in shape of the mirror unit. Accordingly, the amount of misalignment of the torsion bars may be zero. As illustrated in FIGS. 6A and 6B, the axis Tc of the torsion bars 8 and 10 matches the center Mc of the mirror unit 6, and the torsion bars are not at all misaligned.

FIG. 7A is a rear view of the mirror unit 6 according to the second example embodiment. As illustrated in FIG. 7B, the rib 18 may be shaped like an ellipse. As the center of rotation of the mirror unit is designed to match the center in shape of the mirror unit, no excessive twist and deformation is caused to the torsion bars. Accordingly, the limit value for breakage and failure may be increased.

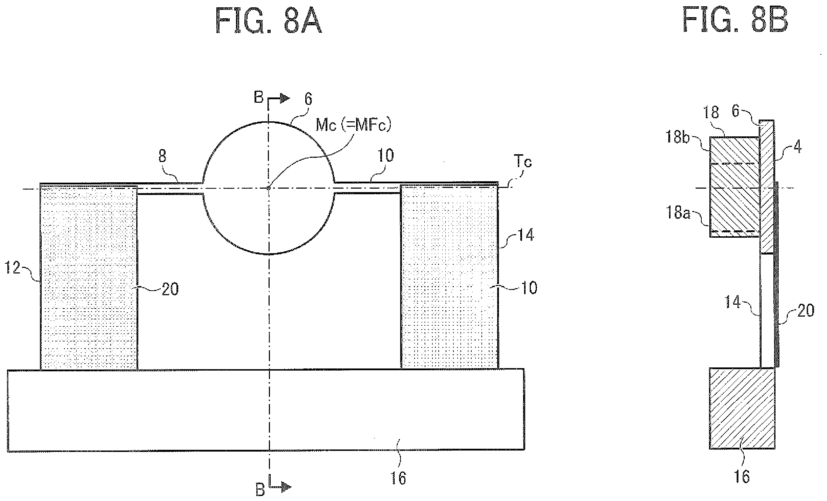

A third example embodiment of the present invention is described below with reference to FIGS. 8A and 8B, FIGS. 9A to 9C, and FIG. 10. In the present example embodiment, the rib 18 is formed in an asymmetric manner with reference to an axis that passes through the center in shape of the mirror unit and that is parallel to the rotation axis Tc of the torsion of the torsion bars. Due to such arrangement, the amount of misalignment of the center of gravity increases, and strong moment can be produced.

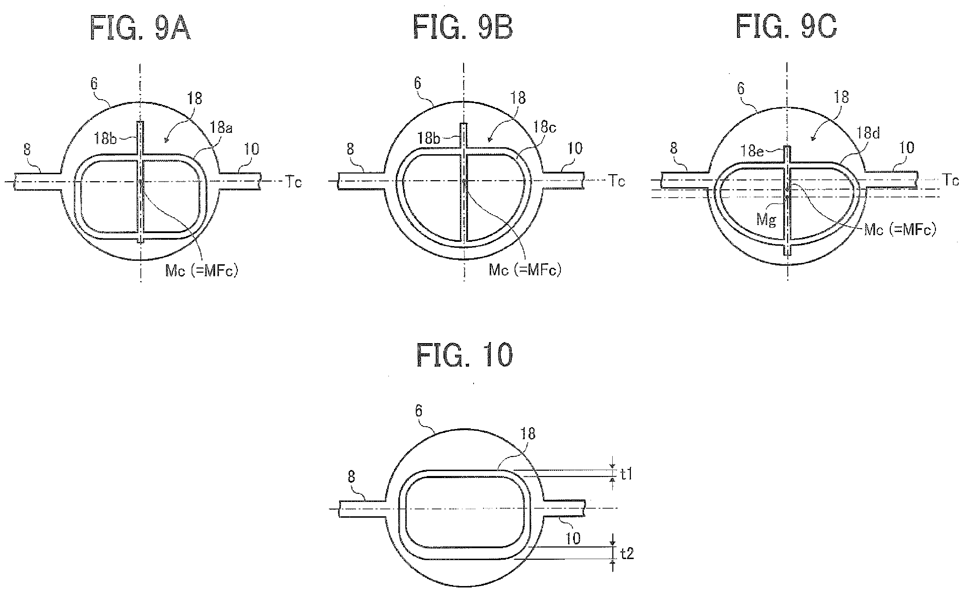

As illustrated in FIG. 9A, the rib 18 includes an ellipse-shaped tube 18a, and a flat plate 18b that passes through the ellipse-shaped tube 18a in a direction orthogonal to the rotation axis Tc of the torsion of the torsion bars. As illustrated in FIG. 9B, the rib 18 may be shaped to include a semicircular tube 18c and the flat plate 18b. As illustrated in FIG. 9C, the rib 18 may be shaped to include a semicircular tube 18d that is more squeezed inside the circumferential edge of the mirror unit 6 compared with the semicircular tube 18c of FIG. 9B, and a flat plate 18e that passes through the semicircular tube 18d in a direction orthogonal to the rotation axis Tc of the torsion of the torsion bars. As the light reflection plane is more easily deformed around the circumference of the light reflection plane, the deformation of the light reflection plane can be reduced by passing through the flat plate 18e and covering the light reflection plane to the very edge. In FIG. 9C, reference sign Mg indicates the center of gravity of the mirror unit. Alternatively, as illustrated in FIG. 10, the amount of misalignment of the center of gravity may be increased by making the thickness t2 on the fixed edge side of the drive bars 12 and 14 in the ellipse-shaped rib 18 greater than the thickness t1 on the other side.

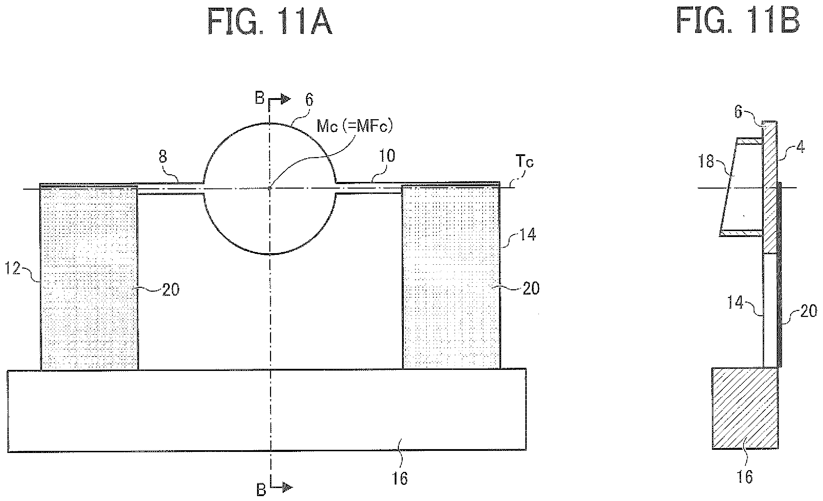

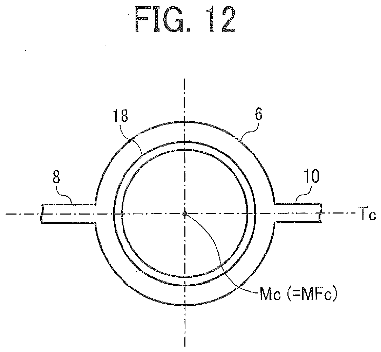

A fourth example embodiment of the present invention is described below with reference to FIGS. 11A and 11B and FIG. 12. As illustrated in FIG. 11B, in the fourth example embodiment, the rib 18 has a tapering shape where the height of the rib 18 in a normal-line direction of the light reflection plane is changed. More specifically, the amount of the misalignment of the center of gravity is increased by making the height of the rib 18 on the fixed edge side of the drive bars 12 and 14 greater. By so doing, strong moment can be produced. In other words, the rib 18 has asymmetric shape with reference to a normal line of the light reflection plane. As illustrated in FIG. 12, the center Rc of the rib 18 matches the center Mc of the mirror unit 6 in the present example embodiment. Accordingly, the insusceptibility to moment of inertia improves.

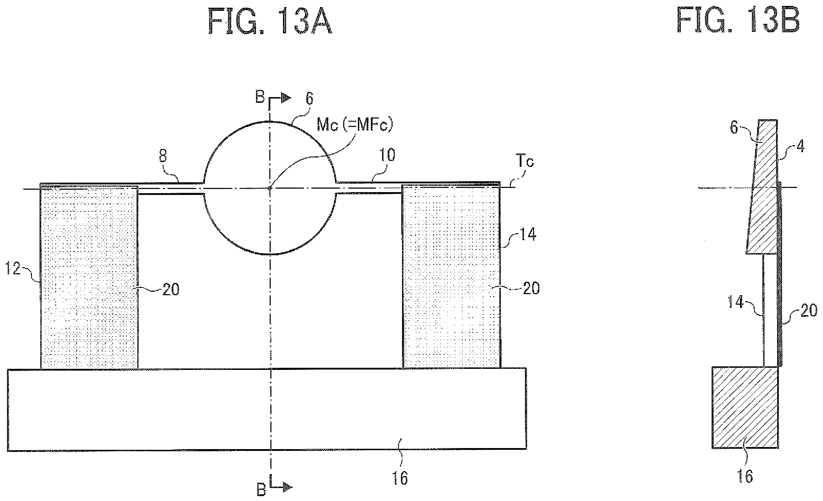

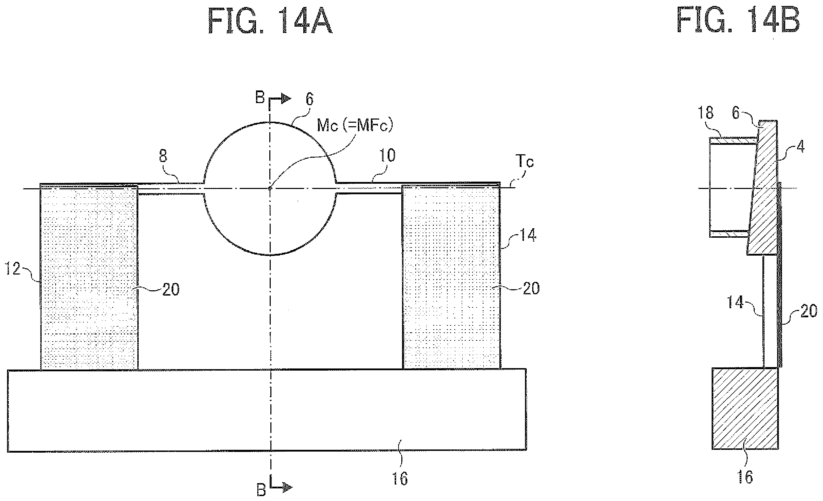

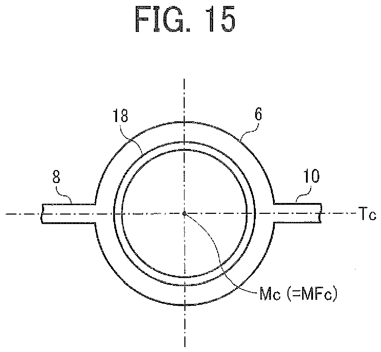

A fifth example embodiment of the present invention is described below with reference to FIGS. 13A and 13B. In the fifth example embodiment, the rib 18 is not provided but the thickness of the mirror unit 6 is varied. By so doing, the amount of misalignment of the center of gravity increases, and strong moment is produced. More specifically, the thickness of the mirror unit 6 on the fixed edge side of the drive bars 12 and 14 is increased. In other words, the mirror unit 6 has asymmetric tapering shape with reference to a normal line of the light reflection plane. The reinforcement by the rib 18 is substituted by the level of thickness of the mirror unit 6. When only the varied thickness of the mirror unit 6 is not sufficient for preventing distortion on the light reflection plane, the rib 18 may further be added as illustrated in FIGS. 14A and 14B and FIG. 15 (sixth example embodiment).

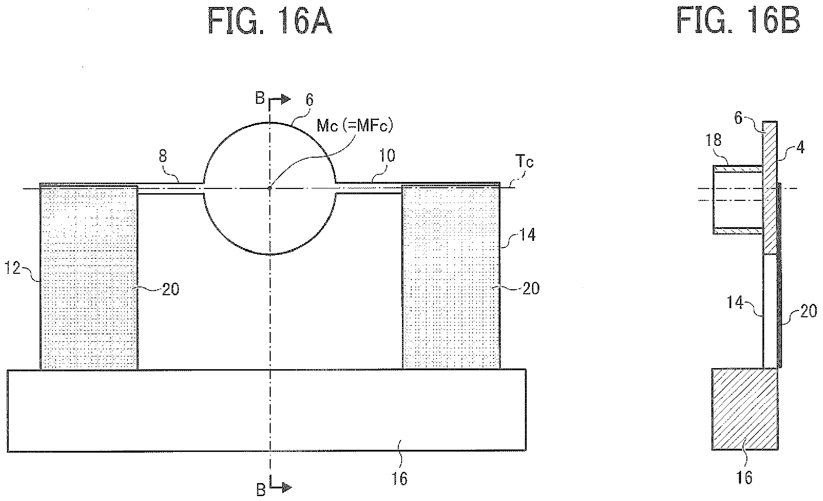

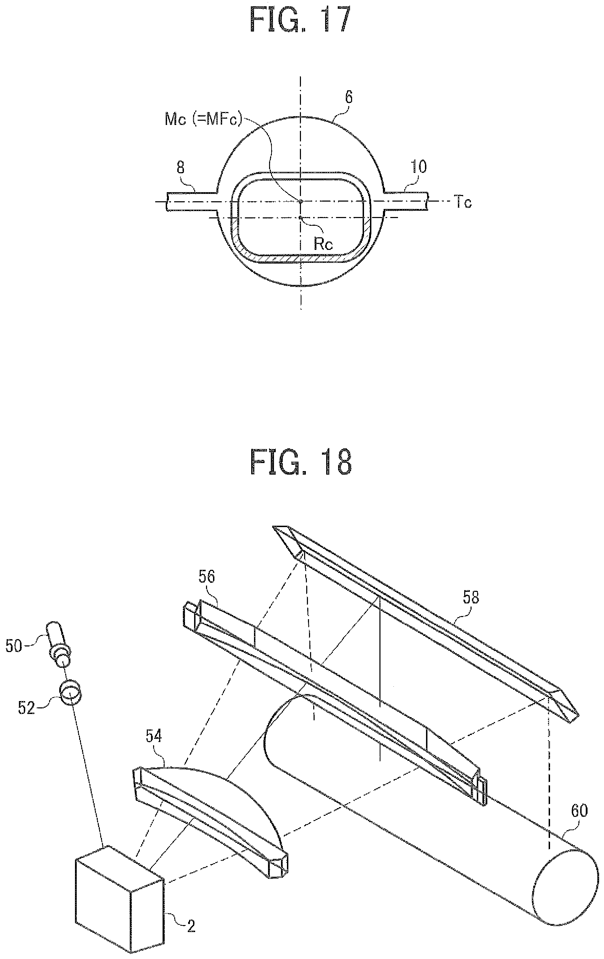

A seventh example embodiment of the present invention is described below with reference to FIGS. 16A and 16B and FIG. 17. In the seventh example embodiment, the rib 18 is ellipse-shaped in a similar manner to that of FIG. 7B, but the material of approximately half of the drive bars 12 and 14 on the fixed edge sides is different and thus the specific gravity is high. The rib 18 is arranged such that portions with large specific gravity shift towards the fixed edges of the drive bars with reference to the center in shape of the mirror unit. By so doing, strong moment can be produced.

In the example embodiments described above, the base 16 is considered to be a fixed member, and the mirror unit 6 that is supported by the base 16 rotates and oscillates. If the base 16 is formed as a single unit of frame as illustrated in FIG. 5 and the base 16 is configured to rotate and oscillate in a direction different from the direction of the mirror unit 6, two-dimensional scanning may be performed.

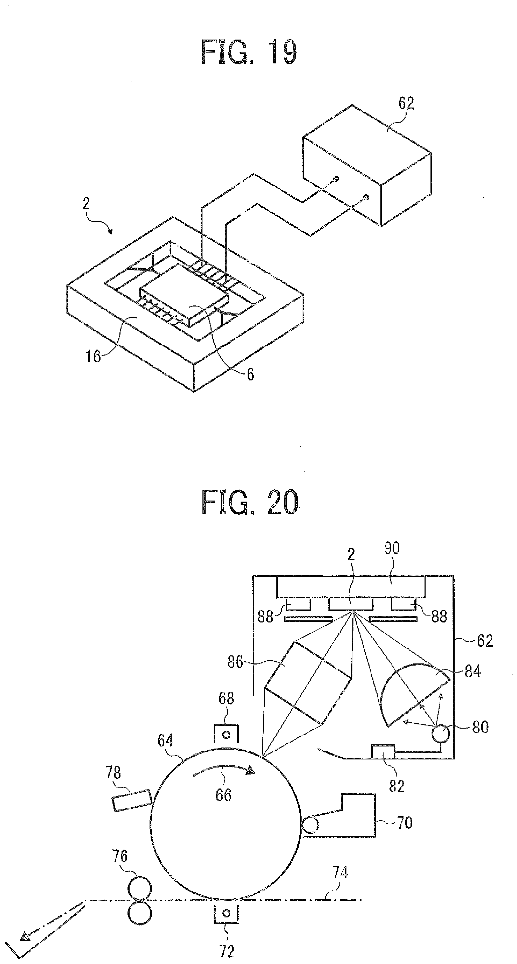

FIG. 18 and FIG. 19 are diagrams of an optical scanner according to an eighth example embodiment of the present invention. As illustrated in FIG. 18, the laser beam emitted from the laser element 50 that serves as a light source passes through a collimate optical system 52, and is deflected by a deflection mirror 2. The deflected laser beam is formed in a state of spot on a to-be-scanned surface 60 such as a photoconductor drum after passing through an image forming optical system that includes an fθ lens 54, a toroidal lens 56, and a mirror 58. The deflection mirror 2 is similar to the light deflector of the example embodiments described above.

As illustrated in FIG. 19, a mirror driving unit 62 that drives the deflection mirror 2 is provided for an optical scanner. The lower electrode and the upper electrode as illustrated in FIGS. 4A, 4B, and 4C are electrically connected to the mirror driving unit 62. The mirror driving unit 62 applies driving voltage to between the lower electrode and the upper electrode. The optical scanner according to the present example embodiment may be used as an optical scanner of a photo-printing printer or an image forming apparatus such as a copier.

FIG. 20 illustrates an image forming apparatus according to a ninth example embodiment of the present invention. An optical writing unit (optical scanner) 62 provided with the light deflector 2 described in the example embodiments above emits the laser beam to a to-be-scanned surface to write an image thereon. A photoconductor drum 64 serves as an image bearer, and is provided with a surface to be scanned by the optical writing unit 62. The optical writing unit 62 scans the surface (to-be-scanned surface) of the photoconductor drum 64 using a single or a plurality of laser beams modulated by a recording signal, in the axial direction of the photoconductor drum 64.

The photoconductor drum 64 is driven to rotate in the direction indicated by an arrow 66, and the surface that is charged by a charging device 68 is optically scanned by the optical scanner 62. Accordingly, an electrostatic latent image is formed. The electrostatic latent image is visualized by a developing device 70 as a toner image, and the toner image is transferred by a transfer unit 72 to a recording paper 74 that serves as transfer medium. The transferred toner image is fixed by a fixing unit 76 to the recording paper 74. The residual toner on the surface of the photoconductor drum 64 that has passed through the transfer unit 72 of the photoconductor drum 64 is removed by a cleaning unit 78.

A belt type photoconductor may be used in place of the photoconductor drum 64. An intermediate transfer system may be adopted in which a toner image is temporarily transferred to a transfer medium other than a recording paper and the toner image is transferred from the transfer medium to a recording paper and is fixed. The optical writing unit 62 includes, for example, a light source 80 that emits a single or a plurality of laser beams modulated by a recording signal, a light source driving unit 82 that modulates the light source, the light deflector 2 of the example embodiments described above, an image forming optical system 84 that forms an image of the laser beam (light beam) modulated by a recording signal, which is emitted from the light source 80, on the light reflection plane of the light deflector 2, and a scanning optical system 86 that forms an image of a single or a plurality of laser beams reflected at the mirror surface on the surface (to-be-scanned surface) of the photoconductor drum 64. The light deflector 2 is mounted on a substrate 90 together with an integrated circuit 88 that drives the light deflector 2, and is integrated into the optical writing unit 62.

The light deflector 2 requires a low power consumption to operate compared with a polygon mirror, and thus is advantageous in power-saving of an image forming apparatus. The light deflector 2 makes a smaller wind noise when the mirror unit oscillates compared with a polygon mirror, and thus is advantageous in achieving low noise of an image forming apparatus. The optical scanner 62 requires much smaller footprint than that of a polygon mirror, and the amount of the heat generated by the light deflector 2 is a little. Accordingly, downsizing is easily achieved, and thus the optical scanner 62 is advantageous in downsizing the image forming apparatus. Note that the conveyance system of the recording paper 74, the driving mechanism of the photoconductor drum 64, the controller of the developing device 70 and the transfer unit 72, and the drive system of the light source 80 are similar to those of the conventional image forming apparatus, and thus are omitted in FIG. 20.

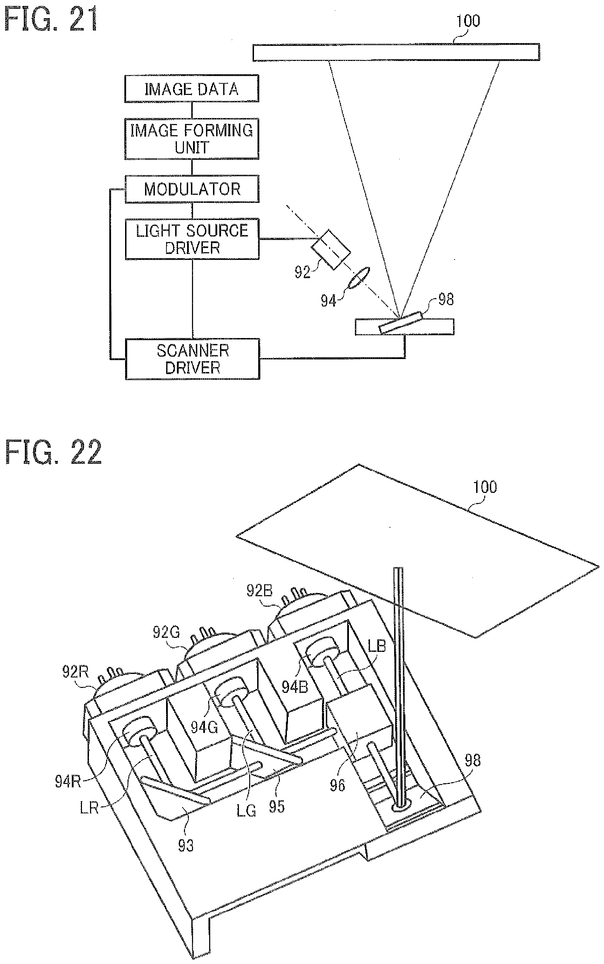

FIG. 21 and FIG. 22 are diagrams of an image projector according to a tenth example embodiment of the present invention.

FIG. 21 is a diagram of an image projector according to the tenth example embodiment of the present invention. As illustrated in FIG. 21, the image projector includes an image generation unit, a modulator, a light source driver, and a scanner driver. The image generation unit generates a drive instruction based on the image data to control the light source driver and the scanner driver. The modulator converts the drive instruction from the image generation unit into a modulated optimal driving signal. The light source driver controls the light source based on the modulated signal. The scanner driver controls the two-dimensional reflection angle variable mirror 98 based on the modulated signal.

FIG. 22 is a perspective view of the entire image projector according to the tenth example embodiment of the present invention. As illustrated in FIG. 22, the image projector according to the present example embodiment includes laser beam sources 92R, 92G, and 92B that emit laser beams of three different wavelengths, and condenser lens 94R, 94G, and 94B that are arranged near the exit ends of the respective laser beam sources to approximately collimate the diverging light emitted from the laser beam sources 92R, 92G, and 92B. The laser beam sources 92R, 92G, and 92B emit red laser beam LR, green laser beam LG, and blue laser beam LB, respectively. The laser beam LR is reflected by a mirror 93, and passes through a half mirror 95 or is reflected at the half mirror 95.

The approximately-collimated laser beam is combined by a combining prism 96, and enters a two-dimensional reflection angle variable mirror 98 of MEMS. The configuration of the two-dimensional reflection angle variable mirror 98 is similar to that of the light deflector of the example embodiments described above. The two-dimensional reflection angle variable mirror 98 oscillates in two directions that are orthogonal to each other, with an amplitude of prescribed angle (for example, 10 degrees). The two-dimensional reflection angle variable mirror 98 may be configured by a combination of two one-dimensional scanning mirrors, instead of a single unit of two-dimensional reflection angle variable mirror. Alternatively, a rotation scanning mirror such as a polygon mirror may be used.

The intensity of the laser beam sources of three different wavelengths are modulated in accordance with the timing in which each laser beam is deflected and scanned by the two-dimensional reflection angle variable mirror 98, and two-dimensional image data is projected on a projection plane 100. In intensity modulation, pulse width or amplitude may be modulated. A driver converts a modulated signal into electric current capable of driving the laser, and the laser beam source is driven by the obtained electric current.

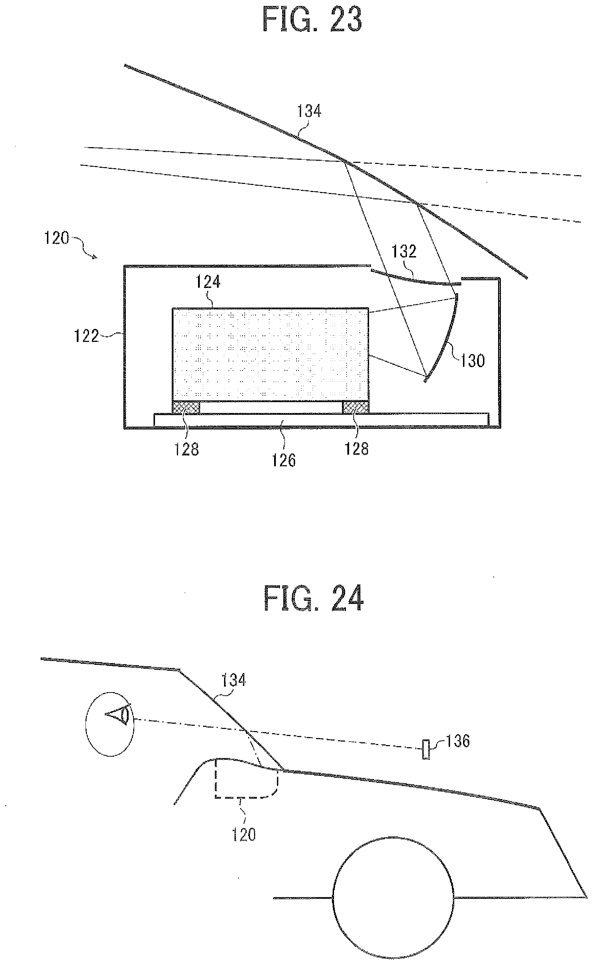

FIG. 23, FIG. 24, and FIG. 25 are schematic diagrams of a heads-up display (HUD) according to an eleventh example embodiment of the present invention. The HUD according to the present the present example embodiment includes the image projector with a deflection mirror of the example embodiments described above. FIG. 23 is a schematic diagram of the entire HUD according to the eleventh example embodiment of the present invention. The HUD according to the present example embodiment is a HUD of windshield type where the front windshield of a vehicle is used as a part of the projection plane. As illustrated in FIG. 23, the HUD 120 includes a housing 122, and an image forming unit 124 that is accommodated in the housing 122. The image forming unit 124 is disposed on the base 126 that is arranged at the bottom of the housing 122, via a vibration isolator 128.

An image that is formed by the image forming unit 124 is emitted through a screen as will be described later. Then, the image is reflected at a projector mirror 130 that serves as an image projection unit, and is emitted to a windshield 134 through an exit window 132. As illustrated in FIG. 24, the light reflected as above reaches the eyes of a driver. From a view point of the driver, an image emitted to the screen is recognized as a virtual image 136 several meters ahead of the windshield (visually recognized field).

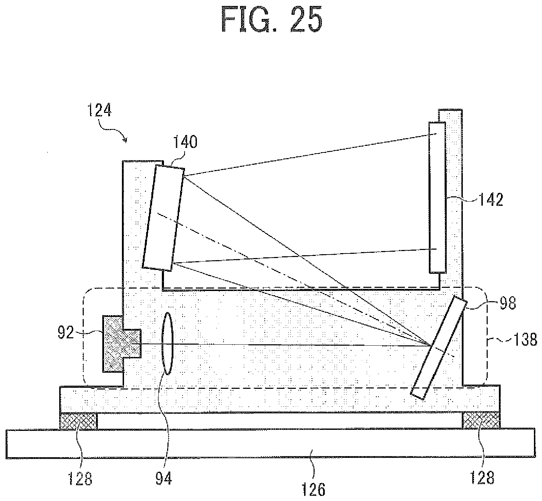

As illustrated in FIG. 25, the image forming unit 124 includes the image projector 138 of the tenth example embodiment described above. In FIG. 25, only one laser beam source 92 is illustrated, but color display may be performed using laser beams of three colors in a similar manner to the example embodiment described above. The laser beam that is emitted from the laser beam source 92 is approximately collimated by the coupling lens 94, and the two-dimensional reflection angle variable mirror 98 is irradiated with the approximately-collimated laser beam. The laser beam that has entered the two-dimensional reflection angle variable mirror 98 is scanned in the two axial directions of the main scanning direction and the sub-scanning direction, and is emitted to a screen 142 through a scanning mirror 140. The laser beam source may be modulated by a laser beam modulating unit to form an image as desired. The screen 142 is formed, for example, by a diffusing board and a microlens, and an intermediate image formed on the screen 142 is visually recognized by a driver as a virtual image through a mirror 130 and a front windshield 134 of the projection system.

The present invention is not limited to the details of the example embodiments described above, and various modifications and improvements are possible.

The example embodiments described above may be applied to bar code scanners or laser radars.

## Claims

1. A light deflector (2) comprising:
a base (16);
a mirror unit (6) having a light reflection plane (4), wherein the mirror unit (6) comprises a center of gravity (Mg) and a center in shape (MFc), the center in shape (MFc) of the mirror unit (6) being a centroid of a planar shape obtained by projecting the mirror unit (6) in a normal-line direction of the light reflection plane (4);
a pair of elastic supporting members (8, 10) each having one end attached to the mirror unit (6) and configured to support the mirror unit (6) in a rotatable and oscillatable manner; and
a pair of drive bars (12, 14) each having one end attached to the other end of corresponding one of the elastic supporting members (8, 10) and the other end attached to the base (16) in a cantilever state, the pair of drive bars (12, 14) being configured to deform by application of voltage, wherein
the mirror unit (6) rotates and oscillates as deformation of the drive bars (12, 14) caused by application of voltage is transferred to the mirror unit (6) through the elastic supporting members (8, 10),
**characterised in that**
the center of gravity (Mg) of the mirror unit (6) is misaligned from the center in shape (MFc) of the mirror unit (6).

2. The light deflector (2) according to claim 1, further comprising:
a rib (18) being at least partially cylindrical and formed on an opposite side of the light reflection plane (4) of the mirror unit (6) to prevent the light reflection plane (4) from deforming,
wherein the center of gravity (Mg) of the mirror unit (6) is misaligned due to the rib (18).

3. The light deflector (2) according to claim 1 or 2, wherein a rib (18) exists on both sides of a movable part across the central axis of the torsion bar.

4. The light deflector (2) according to claim 1, wherein the center of gravity (Mg) of the mirror unit (6) is misaligned in a direction parallel to the light reflection plane (4) and in a direction perpendicular to a rotation axis of the mirror unit (6).

5. The light deflector (2) according to claim 1 or 4, wherein the center of gravity (Mg) of the mirror unit (6) is misaligned due to a material of the mirror unit (6) being different in part.

6. The light deflector (2) according to claim 1 or 4, wherein the center of gravity (Mg) of the mirror unit (6) is misaligned due to an asymmetrical shape of the mirror unit (6).

7. The light deflector (2) according to claim 2, wherein
the rib (18) is arranged so as to be misaligned from the center in shape (MFc) of the mirror unit (6).

8. The light deflector (2) according to claim 2, wherein
the rib (18) is formed in an asymmetric manner with reference to an axis that passes through the center in shape (MFc) of the mirror unit (6) and that is parallel to a rotation axis (Tc) of torsion of the elastic supporting members (8, 10).

9. The light deflector (2) according to claim 2, wherein
the center of gravity (Mg) of the mirror unit (6) is misaligned due to a material of the rib (18) being different in part.

10. The light deflector (2) according to any one of claims 1 to 9, wherein the elastic supporting members (8, 10) are misaligned from the center in shape (MFc) of the mirror unit (6) in a direction opposite to a direction in which the center of gravity (Mg) of the mirror unit (6) is misaligned from the center in shape (MFc) of the mirror unit (6).

11. An optical scanner (62) comprising:
a light source (50);
a light deflector (2) configured to deflect light beam emitted from the light source (50); and
an image forming optical system (54, 56, 58) configured to form an image of deflected light beam in a state of spot on a to-be-scanned surface,
wherein the light deflector (2) is the light deflector (2) according to any one of claims 1 to 10.

12. An image forming apparatus comprising:
an image bearer;
an optical scanner (62) configured to form an electrostatic latent image on the image bearer according to image data;
a developing device (70) configured to visualize the electrostatic latent image to form a visible image; and
a transfer unit (72) configured to transfer the visible image to a transfer medium (74),
wherein the optical scanner (62) is the optical scanner (62) according to claim 11.

13. An image projector (138) comprising:
a light source (92);
a collimate optical system (52) configured to collimate light diverging from the light source (92); and
a light deflector (2) configured to deflect and scan the light collimated by the collimate optical system (52) to display an image on a projection plane (100),
wherein the light deflector (2) is the light deflector (2) according to any one of claims 1 to 10.

14. A heads-up display comprising:
an image projector (138) configured to project an image;
a screen (142) configured to project the image projected from the image projector (138); and
an image projection unit (130) configured to project the image projected on the screen (142) to a prescribed visually recognized field,
wherein the image projector (138) is the image projector (138) according to claim 13.

## Patentansprüche

1. Lichtumlenker (2), umfassend:
eine Basis (16);
eine Spiegeleinheit (6) mit einer Lichtreflexionsebene (4), wobei die Spiegeleinheit (6) einen Schwerpunkt (Mg) und einen Formmittelpunkt (MFc) aufweist, wobei der Formmittelpunkt (MFc) der Spiegeleinheit (6) ein Schwerpunkt einer ebenen Form ist, die durch Projizieren der Spiegeleinheit (6) in einer Normalenlinienrichtung der Lichtreflexionsebene (4) erhalten wird;
ein Paar elastischer Stützelemente (8, 10), von denen jeweils ein Ende an der Spiegeleinheit (6) befestigt ist und die so konfiguriert sind, dass sie die Spiegeleinheit (6) drehbar und schwenkbar halten; und
ein Paar von Antriebsstangen (12, 14), von denen jeweils ein Ende an dem anderen Ende eines entsprechenden der elastischen Stützelemente (8, 10) und das andere Ende an der Basis (16) in einem freitragenden Zustand befestigt ist, wobei das Paar von Antriebsstangen (12, 14) so konfiguriert ist, dass es sich durch Anlegen einer Spannung verformt, wobei
die Spiegeleinheit (6) dreht sich und schwingt, da die durch das Anlegen der Spannung verursachte Verformung der Antriebsstangen (12, 14) über die elastischen Tragelemente (8, 10) auf die Spiegeleinheit (6) übertragen wird,
**dadurch gekennzeichnet, dass**
der Schwerpunkt (Mg) der Spiegeleinheit (6) ist nicht mit dem Formzentrum (MFc) der Spiegeleinheit (6) übereinstimmt.

2. Lichtumlenker (2) nach Anspruch 1, ferner umfassend:
eine Rippe (18), die zumindest teilweise zylindrisch ist und auf einer gegenüberliegenden Seite der Lichtreflexionsebene (4) der Spiegeleinheit (6) ausgebildet ist, um eine Verformung der Lichtreflexionsebene (4) zu verhindern,
wobei der Schwerpunkt (Mg) der Spiegeleinheit (6) durch die Rippe (18) verlagert wird.

3. Lichtumlenker (2) nach Anspruch 1 oder 2, bei dem auf beiden Seiten eines beweglichen Teils quer zur Mittelachse des Torsionsstabs eine Rippe (18) vorhanden ist.

4. Lichtumlenker (2) nach Anspruch 1, bei dem der Schwerpunkt (Mg) der Spiegeleinheit (6) in einer Richtung parallel zur Lichtreflexionsebene (4) und in einer Richtung senkrecht zu einer Drehachse der Spiegeleinheit (6) verschoben ist.

5. Lichtumlenker (2) nach Anspruch 1 oder 4, wobei der Schwerpunkt (Mg) der Spiegeleinheit (6) aufgrund eines teilweise unterschiedlichen Materials der Spiegeleinheit (6) dejustiert ist.

6. Lichtumlenker (2) nach Anspruch 1 oder 4, wobei der Schwerpunkt (Mg) der Spiegeleinheit (6) aufgrund einer asymmetrischen Form der Spiegeleinheit (6) dejustiert ist.

7. Lichtumlenker (2) nach Anspruch 2, **dadurch gekennzeichnet, dass** die Rippe (18) ist so angeordnet, dass sie gegenüber dem Formzentrum (MFc) der Spiegeleinheit (6) versetzt ist.

8. Lichtumlenker (2) nach Anspruch 2, **dadurch gekennzeichnet, dass**
die Rippe (18) asymmetrisch in Bezug auf eine Achse geformt ist, die durch den Formmittelpunkt (MFc) der Spiegeleinheit (6) verläuft und parallel zu einer Drehachse (Tc) der Torsion der elastischen Tragelemente (8, 10) ist.

9. Lichtumlenker (2) nach Anspruch 2, **dadurch gekennzeichnet, dass** der Schwerpunkt (Mg) der Spiegeleinheit (6) aufgrund eines zum Teil unterschiedlichen Materials der Rippe (18) verlagert ist.

10. Lichtumlenker (2) nach einem der Ansprüche 1 bis 9, bei dem die elastischen Stützelemente (8, 10) gegenüber dem Formzentrum (MFc) der Spiegeleinheit (6) in einer Richtung versetzt sind, die einer Richtung entgegengesetzt ist, in der der Schwerpunkt (Mg) der Spiegeleinheit (6) gegenüber dem Formzentrum (MFc) der Spiegeleinheit (6) versetzt ist.

11. Optischer Scanner (62), umfassend:
eine Lichtquelle (50);
einen Lichtumlenker (2), der so konfiguriert ist, dass er den von der Lichtquelle (50) emittierten Lichtstrahl ablenkt; und
ein optisches Bilderzeugungssystem (54, 56, 58), das so konfiguriert ist, dass es ein Bild eines abgelenkten Lichtstrahls in einem Zustand eines Flecks auf einer abzutastenden Oberfläche erzeugt,
wobei der Lichtumlenker (2) der Lichtumlenker (2) nach einem der Ansprüche 1 bis 10 ist.

12. Bilderzeugungsgerät, umfassend:
einen Bildträger;
einen optischen Scanner (62), der so konfiguriert ist, dass er ein elektrostatisches latentes Bild auf dem Bildträger entsprechend den Bilddaten erzeugt;
eine Entwicklungsvorrichtung (70), die so konfiguriert ist, dass sie das elektrostatische latente Bild sichtbar macht, um ein sichtbares Bild zu erzeugen; und
eine Übertragungseinheit (72), die so konfiguriert ist, dass sie das sichtbare Bild auf ein Übertragungsmedium (74) überträgt,
wobei der optische Scanner (62) der optische Scanner (62) nach Anspruch 11 ist.

13. Bildprojektor (138), umfassend:
eine Lichtquelle (92);
ein optisches Kollimationssystem (52), das so konfiguriert ist, dass es das von der Lichtquelle (92) ausgehende Licht kollimiert; und
einen Lichtablenker (2), der so konfiguriert ist, dass er das durch das optische Kollimationssystem (52) kollimierte Licht ablenkt und abtastet, um ein Bild auf einer Projektionsebene (100) anzuzeigen,
wobei der Lichtumlenker (2) der Lichtumlenker (2) nach einem der Ansprüche 1 bis 10 ist.

14. Head-up-Display, umfassend:
einen Bildprojektor (138), der zum Projizieren eines Bildes konfiguriert ist;
einen Bildschirm (142), der so konfiguriert ist, dass er das von dem Bildprojektor (138) projizierte Bild projiziert; und
eine Bildprojektionseinheit (130), die so konfiguriert ist, dass sie das auf den Bildschirm (142) projizierte Bild auf ein vorgeschriebenes visuell erkanntes Feld projiziert, wobei der Bildprojektor (138) der Bildprojektor (138) nach Anspruch 13 ist.

## Revendications

1. Déflecteur de lumière (2), comprenant :
une base (16) ;
une unité miroir (6) ayant un plan de réflexion de lumière (4), dans lequel l'unité miroir (6) comprend un centre de gravité (Mg) et un centre de forme (MFc), le centre de forme (MFc) de l'unité miroir (6) étant un centroïde d'une forme plane obtenue en projetant l'unité miroir (6) dans une direction de ligne normale du plan de réflexion de lumière (4) ;
une paire d'éléments de support élastiques (8, 10), chacun ayant une extrémité attachée à l'unité miroir (6) et configurée pour supporter l'unité miroir (6) de manière rotative et oscillante ; et
une paire de barres d'entraînement (12, 14), chacune ayant une extrémité attachée à l'autre extrémité d'un correspondant des éléments de support élastiques (8, 10) et l'autre extrémité attachée à la base (16) dans un état en porte-à-faux, la paire de barres d'entraînement (12, 14) étant configurée pour se déformer par application de tension, dans lequel
l'unité miroir (6) entre en rotation et oscille lorsque la déformation des barres d'entraînement (12, 14) causée par l'application de tension est transférée à l'unité miroir (6) par l'intermédiaire des éléments de support élastiques (8, 10),
**caractérisé en ce que**
le centre de gravité (Mg) de l'unité miroir (6) est désaligné par rapport au centre de forme (MFc) de l'unité miroir (6).

2. Déflecteur de lumière (2) selon la revendication 1, comprenant en outre :
une nervure (18) au moins partiellement cylindrique et formée sur un côté opposé du plan de réflexion de lumière (4) de l'unité miroir (6) pour empêcher le plan de réflexion de lumière (4) de se déformer,
dans lequel le centre de gravité (Mg) de l'unité miroir (6) est désaligné en raison de la nervure (18).

3. Déflecteur de lumière (2) selon la revendication 1 ou 2, dans lequel une nervure (18) existe sur les deux côtés d'une partie mobile à travers l'axe central de la barre de torsion.

4. Déflecteur de lumière (2) selon la revendication 1, dans lequel le centre de gravité (Mg) de l'unité miroir (6) est désaligné dans une direction parallèle au plan de réflexion de lumière (4) et dans une direction perpendiculaire à un axe de rotation de l'unité miroir (6).

5. Déflecteur de lumière (2) selon la revendication 1 ou 4, dans lequel le centre de gravité (Mg) de l'unité miroir (6) est désaligné en raison du fait qu'un matériau de l'unité miroir (6) est différent en partie.

6. Déflecteur de lumière (2) selon la revendication 1 ou 4, dans lequel le centre de gravité (Mg) de l'unité miroir (6) est désalignée en raison d'une forme asymétrique de l'unité miroir (6).

7. Déflecteur de lumière (2) selon la revendication 2, dans lequel
la nervure (18) est agencée afin d'être désalignée par rapport au centre de forme (MFc) de l'unité miroir (6).

8. Déflecteur de lumière (2) selon la revendication 2, dans lequel
la nervure (18) est formée de manière asymétrique en référence à un axe qui passe à travers le centre de forme (MFc) de l'unité miroir (6) et qui est parallèle à un axe de rotation (Tc) de torsion des éléments de support élastiques (8, 10).

9. Déflecteur de lumière (2) selon la revendication 2, dans lequel
le centre de gravité (Mg) de l'unité miroir (6) est désaligné en raison du fait qu'un matériau de la nervure (18) est différent en partie.

10. Déflecteur de lumière (2) selon l'une quelconque des revendications 1 à 9, dans lequel les éléments de support élastiques (8, 10) sont désalignés par rapport au centre de forme (MFc) de l'unité miroir (6) dans une direction opposée à une direction dans laquelle le centre de gravité (Mg) de l'unité miroir (6) est désaligné par rapport au centre de forme (MFc) de l'unité miroir (6).

11. Dispositif de balayage optique (62), comprenant :
une source de lumière (50) ;
un déflecteur de lumière (2) configuré pour défléchir un faisceau de lumière émis depuis la source de lumière (50) ; et
un système optique de formation d'image (54, 56, 58) configuré pour former une image de faisceau de lumière défléchi dans un état de point sur une surface destinée à être balayée,
dans lequel le déflecteur de lumière (2) est le déflecteur de lumière (2) selon l'une quelconque des revendications 1 à 10.

12. Appareil de formation d'image, comprenant :
un support d'image ;
un dispositif de balayage optique (62) configuré pour former une image latente électrostatique sur le support d'image selon des données d'image ;
un dispositif de développement (70) configuré pour visualiser l'image latente électrostatique pour former une image visible ; et
une unité de transfert (72) configurée pour transférer l'image visible à un moyen de transfert (74), dans lequel le dispositif de balayage optique (62) est le dispositif de balayage optique (62) selon la revendication 11.

13. Projecteur d'image (138), comprenant :
une source de lumière (92) ;
un système optique de collimation (52) configuré pour collimater de la lumière divergeant depuis la source de lumière (92) ; et
un déflecteur de lumière (2) configuré pour effectuer la déflexion et le balayage de la lumière collimatée par le système optique de collimation (52) pour afficher une image sur un plan de projection (100),
dans lequel le déflecteur de lumière (2) est le déflecteur de lumière (2) selon l'une quelconque des revendications 1 à 10.

14. Dispositif d'affichage tête haute, comprenant :
un projecteur d'image (138) configuré pour projeter une image ;
un écran (142) configuré pour projeter l'image projetée depuis le projecteur d'image (138) ; et
une unité de projection d'image (130) configurée pour projeter l'image projetée sur l'écran (142) vers un champ prescrit visuellement reconnu,
dans lequel le projecteur d'image (138) est le projecteur d'image (138) selon la revendication 13.
